Europäisches Patentamt

European Patent Office

Office européen des brevets

(11) Veröffentlichungsnummer: 0 386 552
A2

(12) **EUROPÄISCHE PATENTANMELDUNG**

(21) Anmeldenummer: 90103588.1

(22) Anmeldetag: 23.02.90

(51) Int. Cl.5: **G05D 3/20, B23Q 15/26, B25J 9/10**

(30) Priorität: 06.03.89 DE 3907149

(43) Veröffentlichungstag der Anmeldung: 12.09.90 Patentblatt 90/37

(84) Benannte Vertragsstaaten: CH DE FR IT LI NL

(71) Anmelder: **Siemens Aktiengesellschaft Wittelsbacherplatz 2 D-8000 München 2(DE)**

(72) Erfinder: **Schmitz, Norbert Karl-Broeger-Strasse 58 D-8522 Herzogenaurach(DE)**

(54) Schaltungsanordnung zum Verfahren einer endlosen Rundachse.

(57) Es wird eine Methode aufgezeigt, nach der eine einfache Positionierung von endlos drehenden Rundachsen (W) ermöglicht wird. Dazu wird jeweils eine Teilungssollposition ($T_s$) bestimmt, die dann, wenn der positive oder negative Zahlenbereich einer zyklischen Zählstufe (Z) verlassen wir, korrigiert wird, indem die korrigierte Teilungssollposition von einer minimalen bzw. maximalen Teilungssollposition ($T_{min}$, $T_{max}$) ausgeht, die um einen Übertrag und gegebenenfalls um einen Korrekturwert ($+K$, $-K$) variiert wird.

| I | II | | III | IV |
|---|---|---|---|---|
| 100100 | -14 | 2 ⟵ | 111111 | |
| 100011 | | | 111110 | -1 5 |
| 100010 | -15 | 1 | 111101 | |
| 100001 | | | 111100 | -2 4 |
| 100000 | -16 | 5 | 111011 | |
| 011111 | | | 111010 | -3 3 |
| 011110 | 15 | 1 | 111001 | |
| 011101 | | | 111000 | -4 2 |
| 011100 | 14 | 5 | 110111 | |
| 011011 | | | 110110 | -5 1 |
| 011010 | 13 | 4 | 110101 | |
| 011001 | | | 110100 | -6 5 |
| 011000 | 12 | 3 | 110011 | |
| 010111 | | | 110010 | -7 4 |
| 010110 | 11 | 2 | 110001 | |
| 010101 | | | 110000 | -8 3 |
| 010100 | 10 | 1 | 101111 | |
| 010011 | | | 101110 | -9 2 |
| 010010 | 9 | 5 | 101101 | |
| 010001 | | | 101100 | -10 1 |
| 010000 | 8 | 4 | 101011 | |
| 001111 | | | 101010 | -11 5 |
| 001110 | 7 | 3 | 101001 | |
| 001101 | | | 101000 | -12 4 |
| 001100 | 6 | 2 | 100111 | |
| 001011 | | | 100110 | -13 3 |
| 001010 | 5 | 1 | 100101 | |
| 001001 | | | 100100 | -14 2 |
| 001000 | 4 | 5 | 100011 | |
| 000111 | | | 100010 | -15 1 |
| 000110 | 3 | 4 | 100001 | |
| 000101 | | | 100000 | -16 5 |
| 000100 | 2 | 3 | | |
| 000011 | | | | |
| 000010 | 1 | 2 | | |
| 000001 | | | | |
| 000000 | 0 | 1 | | |

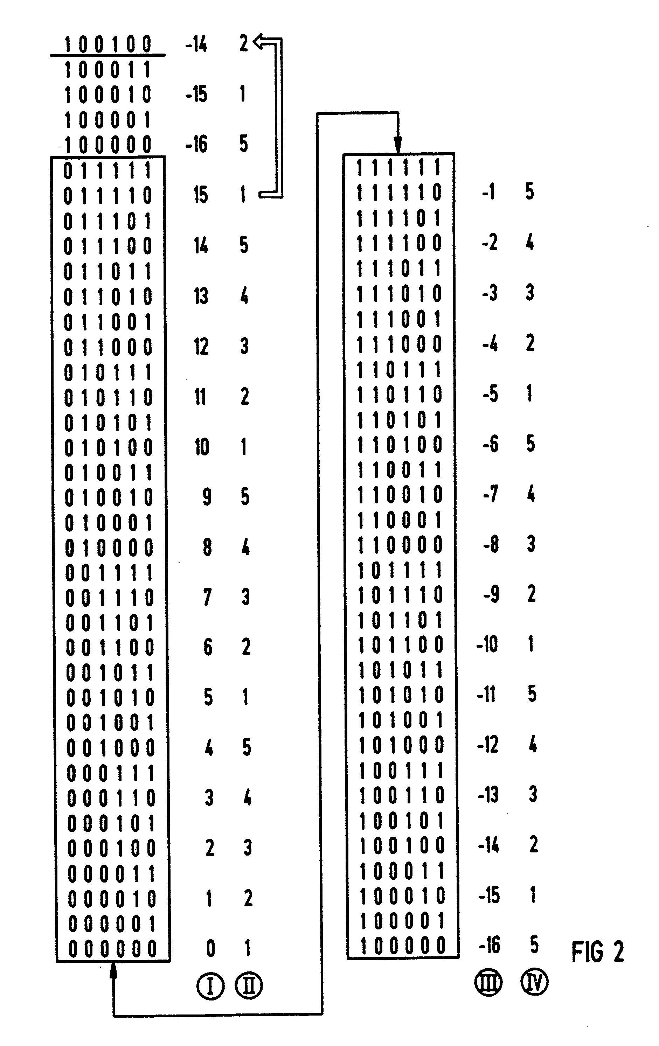

Ⓘ Ⓘ Ⓘ                     Ⓘ Ⓘ    FIG 2

## Schaltungsanordnung zum Verfahren einer endlosen Rundachse

Mit Hilfe von Schaltungsanordnungen, bei denen entsprechend vorliegenden Eingangssignalen eine zyklisch arbeitende Zählstufe vor- bzw. rückwärtsschaltbar ist, können Winkelpositionen von Rundachsen, wie sie bei Werkzeugmaschinen oder Robotern auftreten, digital erfaßt und verarbeitet werden. Eine derartige Schaltung ist aus der DE-Anmeldung P 37 26 694.2 bekannt. Die Zählstufe weist dabei eine Breite von n-Stellen eines symmetrischen Binärcodes auf und allen entsprechend dem Binärcode unmittelbar aufeinanderfolgenden Binärwörtern sind unmittelbar aufeinanderfolgende Stellungen einer nachgeschalteten Konverterstufe mit einer Modulozahl m zugeordnet.

Wenn bei einer Werkzeugmaschine oder einem Roboter endlose Rundachsen, z.B. zur Bearbeitung von Zahnrädern oder zur Positionierung eines Werkzeugträgers, vorhanden sind, ist dabei die Verwendung eines Bezugsmaßes für jeweils eine Umdrehung, im allgemeinen 360°, und eines Teilungsmaßes, d.h. einer vorgegebenen Anzahl von Positionen innerhalb des Bezugsmaßes, üblich. Die sich dadurch ergebenden Teilungsollpositionen können, bei komplexen Einrichtungen, wie beispielsweise Bearbeitungszentren, verschiedenste Zuordnungen zu den Zählerständen der jeweiligen Zählstufen annehmen. Das führt dazu, daß die aufeinanderfolgenden Teilungsollpositionen nicht den unmittelbar aufeinanderfolgenden Binärwörtern des Binärcodes zugeordnet werden können, sondern daß beispielsweise für eine erste Rundachse jedem zweiten und für eine zweite Rundachse jedem zehnten Schritt des Binärcodes jeweils eine neue Teilungssollposition der ersten bzw. zweiten Rundachse zuzuordnen ist.

Bei der eingangs genannten deutschen Patentanmeldung wird stets dann, wenn der positive bzw. negative Zahlenbereich der Zählstufe überschritten wird, ein Korrekturvorgang eingeleitet. Dieses Vorgehen ist jedoch dann, wenn aufeinanderfolgende Teilungssollpositionen zu betrachten sind, nicht möglich, weil eben nicht ohne weiteres erkennbar ist, ob eine folgende Teilungssollposition ein Verlassen des positiven bzw. negativen Zahlenbereiches bewirkt.

Aufgabe der Erfindung ist es, eine Schaltungsanordnung zu schaffen, die auch bei einer Verwendung von Teilungssollpositionen sicherstellt, daß bei einem Übergang des positiven bzw. negativen Zahlenraums einer zugeordneten Zählstufe Fehlpositionierungen vermieden werden.

die Erfindung besteht damit in einer Schaltungsanordnung mit einer zyklisch vor- bzw. rückschaltbaren Zählstufe, wobei entsprechend deren Zählerstand eine endlose Rundachse einem Teilungsmaß entsprechend in zyklisch aufeinanderfolgende Positionen verfahrbar ist, die über mehrere Umdrehungen zu Teilungssollpositionen summierbar sind, wobei sich innerhalb des Zählvolumens der Zählstufe eine maximale Teilungssollposition und eine minimale Teilungssollposition ergibt, wobei mit einer jeden Änderung des momentanen Wertes der Teilungsollposition durch eine Vergleichseinrichtung geprüft wird, ob sich ein positiver bzw. negativer Übertrag zur maximalen bzw. minimalen Teilungssollposition ergibt, und wobei der um den positiven Übertrag erhöhte, bzw. der um den negativen Übertrag erniedrigte Wert der maximalen bzw. der minimalen Teilungssollposition als korrigierte Teilungssollposition einer nachgeschalteten Auswerteeinrichtung zuführbar ist.

Eine vorteilhafte Ausbildung der Erfindung ist dadurch gekennzeichnet, daß ein beim Übergang zwischen dem positiven bzw. negativen Zählbereich der Zählstufe sich ergebender Sprung zwischen den Positionen durch Einfügen eines jeweiligen Korrekturwertes eliminierbar ist. Derartige Sprünge treten stets dann auf, wenn der Modul des Fortschaltens kein ganzzahliger Bruchteil des positiven bzw. negativen Zählbereiches ist.

Ein Ausführungsbeispiel der Erfindung ist in der Zeichnung dargestellt und wird im folgenden näher erläutert.

In der Darstellung ist eine endlos drehende Achse, z.B. ein Werkzeugträger W, gezeigt, die von einer Steuerung ST in ihrer Position eingestellt wird. Die jeweils eingenommene Position wird über eine Leitung L an einen Speicher S1 zurückgemeldet. In diesem Speicher S1 befindet sich demgemäß die jeweilige Istposition. Unter dieser ist dabei eine Teilungsistposition $T_i$ zu verstehen. Bei zwei Umdrehungen des Werkzeugträgers und Einnahme der zweiten von fünf möglichen Positionen ist beispielsweise eine zwölfte Teilungsistposition erreicht. Den einzelnen Positionen während jeder Umdrehung des Werkzeugträgers W können dabei Werkzeuge zugeordnet sein, die im Ausführungsbeispiel durch Dreiecke, Kreise bzw. ein Quadrat angedeutet sind. Bei der Darstellung des Werkzeugträgers ist ferner durch Strichmarkierungen gezeigt, daß prinzipiell durch die diesem zugeordnete endlose Achse auch jeweils eine Zwischenposition definierbar wäre. Man kann beim Ausführungsbeispiel somit davon ausgehen, daß pro Umdrehung jeweils zehn Positionen definierbare wären (Bezugsmaß "10"), daß jedoch im Anwendungsfall jeweils auf fünf Positionen verfahren werden kann (Teilungsmaß "5").

Eine Änderung der Teilungsistposition $T_i$ auf eine neue Teilungssollposition erfolgt beispielsweise dadurch, daß die Teilungsistposition $T_i$ entweder um einen Wert $+dT$ erhöht oder um einen Wert $-dT$ erniedrigt wird. Der dadurch resultierernde Wert einer Teilungssollposition wird mittels einer einem Eingabegerät für die Werte $+dT$ und $-dT$ und dem Speicher S1 nachgeschalteten Addierstufe A1 gebildet.

Der resultierende Wert der Teilungsollposition wird nun daraufhin untersucht, ob er einen durch das Zählvolumen einer der Steuerung ST zugeordneten Zählstufe Z gegebenen Wert für eine maximale Teilungsollposition überschreitet bzw. den minimalen Wert für eine Teilungssollposition unterschreitet. Ist dies nicht der Fall, wird der Ausgangswert der Addierstufe A1 über eine Schaltstufe SCH direkt der Steuerung ST zugeleitet, die entsprechend dem Wert der Teilungssollposition $T_s$ die Zählstufe Z der Steuerung ST beeinflußt.

Andernfalls wird ein positiver bzw. negativer Übertrag zur maximalen bzw. minimalen Teilungssollposition $T_{max}$ bzw. $T_{min}$ in einer zweiten Addierstufe A2 addiert, der die Werte für die maximale Teilungssollposition $T_{max}$ und minimale Teilungssollposition $T_{min}$ von einem Speicher S4 zugeführt werden.

Durch Hinzufügen eines Korrekturwertes $+K$ bzw. $-K$ in der Addierstufe A2 kann ferner ein sich beim Übergang zwischen dem positiven bzw. dem negativen Zählbereich der Zählstufe Z sich ergebender Sprung zwischen den Positionen eliminiert werden. Dieser Korrekturwert $+K$ bzw. $-K$ wird einem Speicher S3 entkommen, der an den Eingang der Addierstufe A2 geschaltet ist. Am Ausgang der Addierstufe A2 liegt damit ein korrigierter und verarbeitungsfähiger Wert der Teilungssollposition $T_s$ vor.

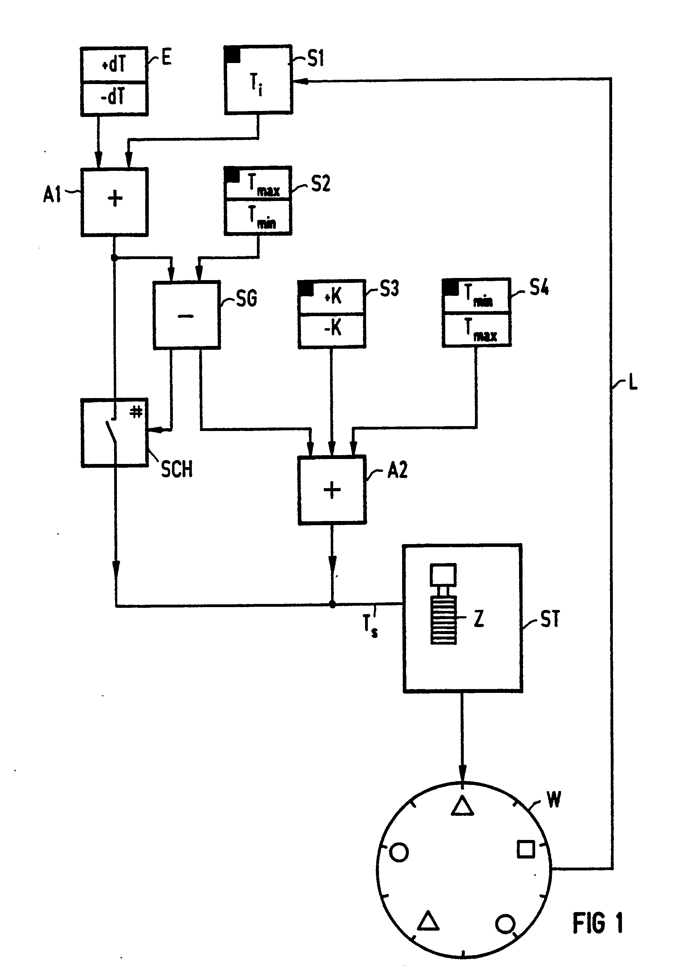

Zum Verständnis der Arbeitsweise der Schaltung gemäß FIG 1 ist in FIG 2 ein Diagramm gezeigt, das mit zwei umrahmten Feldern den gesamten Zahlenraum einer sechsstelligen Zählstufe Z zeigt. Im linken Feld sind dabei Binärzahlen 000000 bis 011111 angeführt, denen für einen positiven Richtungssinn Teilungssollpositionen 0 bis 15 (Spur I) zugeordnet sind. Es ist dabei angenommen, daß der Teilungssollposition 0 eine Stellung 1 (Spur II) des Werkzeugträgers zugeordnet ist, der Teilungssollposition 1 eine Stellung 2 des Werkzeugträgers zugeordnet ist, usw.. Am Ende des positiven Zählbereiches ist einer Teilungssollposition 15 wiederum eine Stellung 1 des Werkzeugträgers zugeordnet. Daß Binärzahlen auftreten, denen keine Teilungssollpositionen zugeordnet sind, ist durch das gewählte Bezugsmaß bedingt, das in diesem Fall doppelt so groß wie das Teilungsmaß ist.

Im rechten Feld sind Binärzahlen 111111 bis 100000 gezeigt, die den negativen Zahlenbereich der Zählstufe Z angeben. Dabei ist der Binärzahl 1111110 eine Teilungssollposition $-1$ (Spur III) zugeordnet, bei der eine Stellung 5 (Spur IV) vorliegt und diese Konkordanz erstreckt sich bis zu einer Teilungssollposition $-16$, bei der ebenfalls eine Stellung 5 auftritt.

Der positive Zahlenbereich der Zählstufe 2 wird beim Erreichen einer Binärzahl 100000 überschritten und dieser Binärzahl wäre, wie der Spur II entnehmbar ist, eine Stellung 5 zuzuordnen. Dies würde allerdings einen Sprung um 4 Werkzeugpositionen gegenüber der Binärzahl 011110 bedeuten. Demzufolge ist ein Korrekturverfahren erforderlich, wie dies in der eingangs genannten Patentanmeldung bekannt ist. Dieses Korrekturverfahren bildet einen Korrekturwert $+K$, der einen durch einen offenen Pfeil symboliserten Sprung in den negativen Zahlenraum auslöst, der oberhalb des Feldes für den positiven Zahlenraum noch einmal angedeutet ist. Eben dieser Korrekturwert $+K$ ist im Speicher S3 niedergelegt.

Beim Verlassen des negativen Zahlenbereiches in negativer Richtung wäre ein entsprechender Vorgang zu durchlaufen, der jedoch der Übersichtlichkeit halber nicht im einzelnen dargestellt ist, jedoch zum Wert $-K$ führt, der ebenfalls im Speicher S3 hinterlegt ist.

Es sei nun angenommen, daß beim Vorliegen einer Teilungsistposition 14 eine Teilungssollposition 17 ereicht werden soll. Durch den gewählten Zahlenraum ist der maximal erreichbare Wert in positiver Richtung die Teilungssollposition 15. Es ergibt sich damit ein Übertrag von $+2$. Ferner ergibt sich ein Korrekturwert $+K = 1$. Die minimale Teilungssollposition ist $-16$. Zu dieser Teilungsposition $-16$ werden $+1$ und $+2$ addiert und es ergibt sich die korrigierte Teilungssollposition $-13$, der die Stellung 3 entspricht. Ein Verfahren auf eine der Teilungssollpositionen $-13$ entsprechende Stellung erfolgt dann so, daß die Zählstufe Z ausgehend vom Zählerstand 01110 auf den Zählerstand 100110 fortgeschaltet wird. Damit wird die gewünschte Rotationsbewegung bewerkstelligt.

## Ansprüche

1. Schaltungsanordnung mit einer zyklisch vor- bzw. rückschaltbaren Zählstufe (Z), wobei entsprechend deren Zählerstand eine endlose Rundachse (W) einem Teilungsmaß entsprechend in zyklisch aufeinanderfolgende Positionen verfahrbar ist, die über mehrere Umdrehungen zu Teilungssollpositionen summierbar sind, wobei sich innerhalb des Zählvolumens der Zählstufe (Z) eine maximale Teilungssollposition ($T_{max}$) und eine minimale Teilungssollposition ($T_{min}$) ergibt, wobei mit einer jeden Änderung des momentanen Wertes der Teilungssollposition durch eine Vergleichseinrichtung (SG) geprüft wird, ob sich ein positiver bzw. negativer Übertrag zur maximalen bzw. minimalen Teilungssollposition ($T_{max}$ bzw. $T_{min}$) ergibt, und wobei der um den positiven Übertrag erhöhte bzw. der um den negativen Übertrag erniedrigte Wert der maximalen bzw. der minimalen Teilungssollposition ($T_{max}$ bzw. $T_{min}$) als korrigierte Teilungssollposition ($T_s$) einer nachgeschalteten Auswerteeinrichtung (ST) zuführbar ist.

2. Schaltungsanordnung nach Anspruch 1, **dadurch gekennzeichnet,** daß ein beim Übergang zwischen dem positiven bzw. negativen Zählbereich der Zählstufe (Z) sich ergebender Sprung zwischen den Positionen durch Einfügen eines jeweiligen Korrekturwertes eliminierbar ist.

FIG 1

EP 0 386 552 A2

| I | II | | III | IV |
|---|---|---|---|---|
| 1 0 0 1 0 0 | -14 | 2 | 1 1 1 1 1 1 | |
| 1 0 0 0 1 1 | | | 1 1 1 1 1 0 | -1  5 |
| 1 0 0 0 1 0 | -15 | 1 | 1 1 1 1 0 1 | |
| 1 0 0 0 0 1 | | | 1 1 1 1 0 0 | -2  4 |
| 1 0 0 0 0 0 | -16 | 5 | 1 1 1 0 1 1 | |
| 0 1 1 1 1 1 | | | 1 1 1 0 1 0 | -3  3 |
| 0 1 1 1 1 0 | 15 | 1 | 1 1 1 0 0 1 | |
| 0 1 1 1 0 1 | | | 1 1 1 0 0 0 | -4  2 |
| 0 1 1 1 0 0 | 14 | 5 | 1 1 0 1 1 1 | |
| 0 1 1 0 1 1 | | | 1 1 0 1 1 0 | -5  1 |
| 0 1 1 0 1 0 | 13 | 4 | 1 1 0 1 0 1 | |
| 0 1 1 0 0 1 | | | 1 1 0 1 0 0 | -6  5 |
| 0 1 1 0 0 0 | 12 | 3 | 1 1 0 0 1 1 | |
| 0 1 0 1 1 1 | | | 1 1 0 0 1 0 | -7  4 |
| 0 1 0 1 1 0 | 11 | 2 | 1 1 0 0 0 1 | |
| 0 1 0 1 0 1 | | | 1 1 0 0 0 0 | -8  3 |
| 0 1 0 1 0 0 | 10 | 1 | 1 0 1 1 1 1 | |
| 0 1 0 0 1 1 | | | 1 0 1 1 1 0 | -9  2 |
| 0 1 0 0 1 0 | 9 | 5 | 1 0 1 1 0 1 | |
| 0 1 0 0 0 1 | | | 1 0 1 1 0 0 | -10  1 |
| 0 1 0 0 0 0 | 8 | 4 | 1 0 1 0 1 1 | |
| 0 0 1 1 1 1 | | | 1 0 1 0 1 0 | -11  5 |
| 0 0 1 1 1 0 | 7 | 3 | 1 0 1 0 0 1 | |
| 0 0 1 1 0 1 | | | 1 0 1 0 0 0 | -12  4 |
| 0 0 1 1 0 0 | 6 | 2 | 1 0 0 1 1 1 | |
| 0 0 1 0 1 1 | | | 1 0 0 1 1 0 | -13  3 |
| 0 0 1 0 1 0 | 5 | 1 | 1 0 0 1 0 1 | |
| 0 0 1 0 0 1 | | | 1 0 0 1 0 0 | -14  2 |
| 0 0 1 0 0 0 | 4 | 5 | 1 0 0 0 1 1 | |
| 0 0 0 1 1 1 | | | 1 0 0 0 1 0 | -15  1 |
| 0 0 0 1 1 0 | 3 | 4 | 1 0 0 0 0 1 | |
| 0 0 0 1 0 1 | | | 1 0 0 0 0 0 | -16  5 |
| 0 0 0 1 0 0 | 2 | 3 | | |
| 0 0 0 0 1 1 | | | | |
| 0 0 0 0 1 0 | 1 | 2 | | |
| 0 0 0 0 0 1 | | | | |
| 0 0 0 0 0 0 | 0 | 1 | | |

FIG 2